# EUROPEAN PATENT APPLICATION

(11) **EP 3 307 025 A1**
(43) Date of publication of application: **11.04.2018**
(21) Application number: 16802775.3
(22) Date of filing: 24.05.2016
(51) Int. Cl.: H05B 37/02, G06F 3/01, G06F 3/048, G06F 3/14

(54) **CONTENT DISPLAY SYSTEM**

(30) Priority: 05.06.2015 JP 2015114431
(71) Applicant: Panasonic Intellectual Property Management Co., Ltd., Osaka-shi, Osaka 540-6207 (JP)
(72) Inventor: TOMITA, Yoshihiro, Osaka-shi Osaka 540-6207 (JP); OHMAE, Hideki, Osaka-shi Osaka 540-6207 (JP); SAWADA, Susumu, Osaka-shi Osaka 540-6207 (JP)
(74) Representative: Grünecker Patent- und Rechtsanwälte PartG mbB
(86) International application number: PCT/JP2016/002502
(87) International publication number: WO 2016/194333

(57) **Abstract**

A content display system (100) includes a plurality of movable light sources (1). The content display system (100) displays a content using the plurality of light sources (1). Each of the plurality of light sources (1) includes a display device (2), a position detector (4) that detects a position of the light source (1), a storage device (5) storing content information (8) in which a plurality of parts of the content are associated with a plurality of positions at which the plurality of parts are to be displayed, and a control circuit (3) that refers to the content information (8) stored in the storage device (5), obtains data regarding one of the plurality of parts of the content corresponding to the position of the light source (1) detected by the position detector (4), and displays the obtained data on the display device (2).

## Description

### Technical Field

The present invention relates to a content display system.

### Background Art

During these years, events are increasingly held using light or image contents, such as concert venues decorated using projection mapping or penlights.

In projection mapping, a plurality of projectors project images on a target such as a building or an event site, and images projected by adjacent projectors are complemented in such a way as to be seen as a continuous image content.

In addition, in a concert venue or the like, audience members are asked to hold light-emitting devices such as penlights. The penlights light in different ways or different colors depending on seat zones, and all seats are displayed as an optical content in order to involve the audience in a concert and create a sense of unity.

A system disclosed in PTL 1 is an example of a specific system. PTL 1 discloses a light emission control system in which remote devices each including a light emission unit and a current position detection unit are wirelessly connected to a master device, and the light emission units light on the basis of information communicated between a control apparatus and the remote devices through the master device.

### Citation List

### Patent Literature

PTL 1: Japanese Patent No. 3954584

### Summary of Invention

### Technical Problem

The present disclosure provides a system that displays contents.

### Solution to Problem

An optical content display system according to an aspect of the present disclosure includes a plurality of movable light sources. The optical content display system displays a content using the plurality of light sources. Each of the plurality of light sources includes a display device, a position detector that detects a position of the light source, a storage device storing content information in which data regarding a plurality of parts of the content are associated with data regarding a plurality of positions, and a control circuit that refers to the content information stored in the storage device, obtains data regarding one of the plurality of parts of the content corresponding to the position of the light source detected by the position detector, and displays the obtained part of the content on the display device. It should be noted that general or specific aspects of the present disclosure may be implemented as an apparatus, a system, a method, an integrated circuit, a computer program, a storage medium, or any selective combination thereof.

### Advantageous Effects of Invention

The content display system in the present disclosure can display contents.

### Brief Description of Drawings

[Fig. 1] Fig. 1 is a schematic diagram illustrating the configuration of a light source and a reference point apparatus included in an optical content display system according to an embodiment of the present disclosure.
[Fig. 2] Fig. 2 is a schematic diagram illustrating an example of an optical content in which the optical content display system is used according to the present embodiment.
[Fig. 3] Fig. 3 is a table illustrating an example of content information.
[Fig. 4] Fig. 4 is a flowchart illustrating an operation for calculating display information performed by a light source.
[Fig. 5] Fig. 5 is a table illustrating an example of coordinate information regarding reference point apparatuses.
[Fig. 6] Fig. 6 is a block diagram illustrating an example of the configuration of position detection means that detects a position through measurement of distances and the configuration of the reference point apparatuses.
[Fig. 7] Fig. 7 is a flowchart illustrating the operation of the position detection means that detects a position through the measurement of distances.
[Fig. 8] Fig. 8 is a diagram illustrating the arrangement of the reference point apparatuses and the light source at a time when a position is detected through the measurement of distances.
[Fig. 9] Fig. 9 is a schematic diagram illustrating an example of a reference point apparatus and position detection means at a time when a position is detected through measurement of directions.
[Fig. 10] Fig. 10 is a block diagram illustrating an example of the configuration of the position detection means that detects a position through the measurement of directions and the configuration of reference point apparatuses.
[Fig. 11] Fig. 11 is a diagram illustrating the arrangement of the reference point apparatuses and the light source at a time when a position is detected through the measurement of directions.
[Fig. 12] Fig. 12 is a flowchart illustrating the operation of the position detection means that detects a position through the measurement of directions.
[Fig. 13] Fig. 13 is a schematic diagram illustrating an example in which an omnidirectional camera is used as the position detection means.
[Fig. 14A] Fig. 14A is a schematic diagram illustrating an example in which two-dimensional barcodes are provided as reference point apparatuses of the optical content display system.
[Fig. 14B] Fig. 14B is a schematic diagram illustrating an example of the configuration of a position detection unit that detects a position using reference point apparatuses including two-dimensional barcodes.
[Fig. 15] Fig. 15 is a schematic diagram illustrating an example of a reference point apparatus that can be worn by a person and move with the person.
[Fig. 16] Fig. 16 is a diagram illustrating the arrangement of reference point apparatuses and light sources at a time when an optical content is shown while persons who wear the reference point apparatuses are moving.
[Fig. 17] Fig. 17 is a block diagram illustrating an example of the configuration of reference point apparatuses capable of updating reference point coordinate information when the reference point apparatuses have moved and the configuration of position detection means.
[Fig. 18A] Fig. 18A is a flowchart illustrating an operation relating to update of a position performed by a reference point apparatus.
[Fig. 18B] Fig. 18B is a flowchart illustrating an operation for updating coordinate information regarding a reference point apparatus performed by a position detection unit of a light source.
[Fig. 19] Fig. 19 is a schematic diagram illustrating an example in which content information held by a light source includes a plurality of pieces of pattern information.
[Fig. 20] Fig. 20 is a schematic diagram illustrating examples of optical contents at a time when content information to be displayed is selected, according to a situation, from the content information including the plurality of pieces of pattern information.
[Fig. 21] Fig. 21 is a schematic diagram illustrating an example of a light source including an LED matrix display as a display device.
[Fig. 22] Fig. 22 is a schematic diagram illustrating an example of an optical content at a time when LED matrix displays are used as display devices.
[Fig. 23] Fig. 23 is a schematic diagram illustrating an example of an optical content according to the movement of persons at a time when the LED matrix displays are used as display devices.

### Description of Embodiments

### (How Present Disclosure Has Been Conceived)

First, how the present inventors have conceived a content display system will be described.

In a content display system employing projection mapping in examples of the related art, the entirety of a content is shown by projecting a still image, a moving image, or both onto one or a plurality of targets. If the one or plurality of projection targets move, the one or plurality of projection targets need to be tracked. If each of the plurality of projection targets independently moves in a complex manner, it is difficult to perform appropriate projection in accordance with the movement. For example, assume that a large number of people are moving in a central ground of a stadium and projection mapping is performed using these people as projection targets. In this case, if the people, who are the projection targets, move in different directions, it is extremely difficult to perform the projection while tracking these people.

In addition, a method for controlling penlights held by audience members in a concert venue or the like through wireless communication such as Bluetooth (registered trademark) is known. In this kind of method, how the penlights light is often controlled in each seat area. As a result, a displayed content is changed or moved by the light of the penlights. In such a type of control, however, appropriate display cannot be performed if an audience member who holds a penlight, which is a light source, leaves his/her seat and moves.

As described above, in the method in the examples of the related art, when a plurality of moving objects such as persons serve as projection targets or light sources to show a content, projection onto an inappropriate position or emission of light at an inappropriate position might occur if these objects move. Thus, the entirety of the content might not be appropriately displayed. In addition, it is difficult to appropriately display the entirety of the content using the plurality of objects that move in an irregular manner.

PTL 1 discloses a light emission control system that solves this problem to a certain extent. In this light emission control system, remote devices held by audience members are used as light sources. These remote devices are wirelessly connected to a master device, and a control apparatus controls the emission of light of the remote devices through the master device. As a result, even if an audience member moves, the corresponding remote device can be lighted in accordance with a new position. Since the emission of light of the remote devices is controlled through the control performed by the control apparatus in this system, however, a large amount of information communication and information processing, such as collection of positional information regarding the remote devices and distribution of control information according to positions of the remote devices, is necessary. It is therefore difficult to control a large number of light sources when, for example, an optical content is shown by all audience members at seats of a stadium or a crowd of people filling a ground.

That is, when the light emission control system in the example of the related art is used for displaying an optical content in a situation in which light sources are constantly moving, the control apparatus that controls the emission of light of the light sources needs to learn the positions of the individual light sources and transmit light emission control information to the individual light sources. As the number of light sources increases, therefore, a larger amount of communication and a larger amount of processing performed by the control apparatus are necessary, which undesirably causes control of the entirety of the system to fail.

The present inventors, therefore, have carried out a painstaking research in order to provide a system that shows the entirety of optical content display using a large number of moving light sources through a simple configuration. The present inventors have thought that an essence of the above problem is to centrally control everything with the control apparatus. The present inventors, therefore, have arrived at a conclusion that the problem in the example of the related art can be solved by configuring a large number of light sources such that light emission control can be autonomously and correctly performed without central control and removing a large amount of communication and a large amount of central control processing.

More specifically, light sources in the present disclosure each include position detection means that detects positional information regarding itself and store, in advance, data indicating correspondences between positions of the light sources and data to be displayed as content information. The light sources can identify, in the content information stored therein, information to be displayed on the basis of the positions thereof identified by the position detection means and autonomously, collectively, and appropriately display a content without receiving instructions from a control apparatus.

An embodiment of the present disclosure will be specifically described hereinafter with reference to the drawings. The embodiment that will be described hereinafter is a general or specific example. Values, shapes, materials, components, arrangement positions and connection modes of the components, steps, the order of the steps, and the like mentioned in the following embodiment are examples, and do not limit the present disclosure. Among the components described in the following embodiment, ones not described in the independent claim, which defines a broadest concept, will be described as arbitrary components. In addition, the same or similar components might be given the same reference numerals, and redundant description might be omitted.

### (First Embodiment)

An optical content display system according to an embodiment of the present disclosure will be described hereinafter with reference to the drawings. It is to be noted that an "optical content" herein refers to a moving image, a still image, or both displayed by a plurality of light sources.

### 1. Configuration

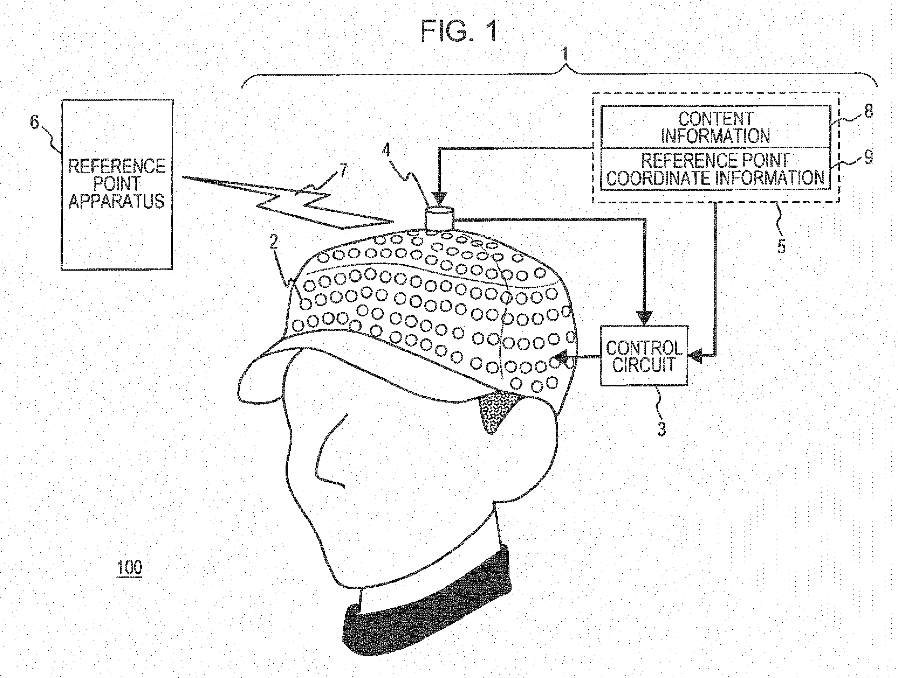

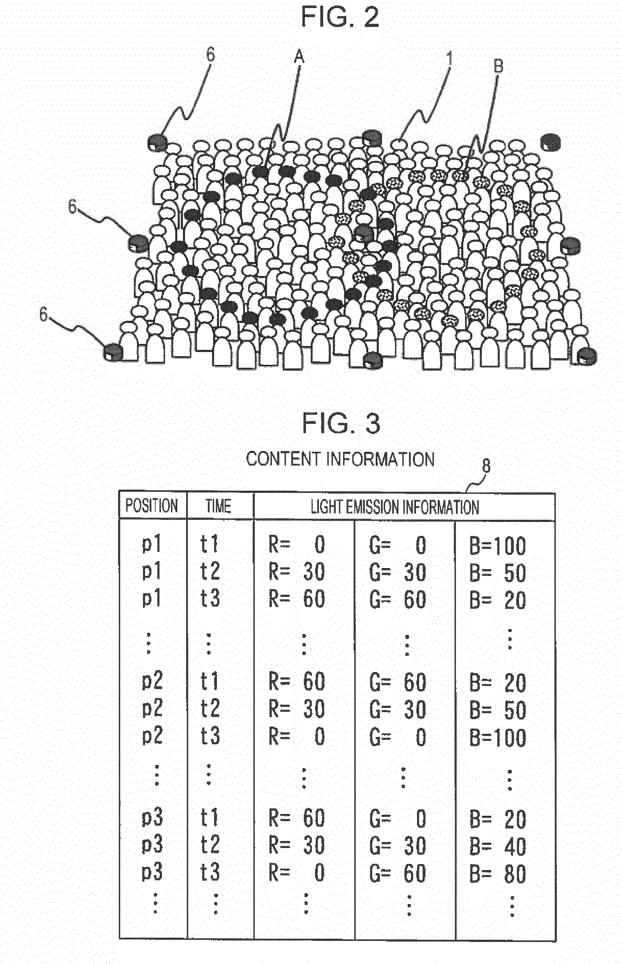

Fig. 1 schematically illustrates the schematic configuration of the optical content display system according to the present embodiment. An optical content display system (hereinafter also referred to as an " content display system") 100 includes a plurality of light sources 1 capable of emitting light of various colors and a plurality of reference point apparatuses 6 that are installed at known positions and that output signals indicating themselves (refer to Fig. 2). In the content display system 100, it is assumed that the light sources 1 held by many moving people serve as light sources (that is, one or more pixels) to collectively display an optical content. Fig. 1 illustrates an example in which a light source 1 is configured in a shape of a cap, which is one of wearable forms.

Each of the light sources 1 includes a display device 2 that emits light for displaying contents, a control circuit 3 that controls the display of the display device 2, a position detection unit 4 that detects a position of the light source 1, and a storage unit 5 storing information regarding display of the light source 1. The display device 2 includes a plurality of LEDs (an example of light-emitting devices). The display device 2 may include a plurality of LEDs that emit light of different colors or may include only a plurality of LEDs that emit light of the same color. The control circuit 3 includes an LED drive IC that drives the LEDs and a microcontroller that controls the LED drive IC. In addition, devices other than LEDs may be used as the light-emitting devices insofar as the devices emit light.

The storage unit 5 is configured by a semiconductor storage device such as a flash memory. The control circuit 3 and the storage unit 5 are arranged inside the cap. The control circuit 3 controls the emission of light of the LEDs included in the display device 2.

The storage unit 5 stores content information 8 referred to when an operation for displaying a content is performed and reference point coordinate information 9 indicating positions of the reference point apparatuses 6. The content information 8 is information regarding contents to be displayed by the light source 1. The content information 8 is data indicating correspondences between the position of the light source 1 and data (that is, display data) indicating a part of a content displayed at that position. For example, the content information 8 includes data regarding a plurality of parts of the entirety of a content and a plurality of positions at which the plurality of parts are to be displayed. The data regarding the plurality of parts and the data regarding the plurality of positions are associated with each other. The content information 8 may also include information regarding times associated with these pieces of information, in addition to these pieces of information.

The position detection unit 4 receives signals (hereinafter referred to as a "reference point signals") 7 output from the reference point apparatuses 6 and calculates positional relationships between the reference point apparatuses 6 and the position detection unit 4 on the basis of the received reference point signals. The position detection unit 4 calculates the position (or coordinates) of the light source 1 by referring to the calculated positional relationships and the reference point coordinate information 9, which indicates the positions of the reference point apparatuses 6, stored in the storage unit 5 in advance.

The reference point apparatuses 6 output the reference point signals 7 including ID information indicating themselves. The reference point signals 7 are signals such as radio waves, light, or acoustic waves. Although the reference point apparatuses 6 are arranged at a plurality of positions in the present embodiment, a reference point apparatus 6 may be arranged at a single position, instead. The ID information is information for distinguishing each of the reference point apparatus 6 from the other reference point apparatuses. Each of the reference point apparatuses 6 holds ID information different from ID information held by any other reference point apparatus 6. The same holds for other modifications and embodiments in the present disclosure.

### 2. Operation

The operation of the optical content display system 100 according to the present embodiment will be described hereinafter with reference to Figs. 1 and 2.

Fig. 2 illustrates a state in which a plurality of persons wearing light sources 1 gather on a field of a stadium or the like as moving light sources. A plurality of reference point apparatuses 6 are arranged in advance in an area of the field of the stadium. The plurality of reference point apparatuses 6 may be arranged at predetermined positions. Each of the light sources 1 receives reference point signals from the reference point apparatuses 6 and identifies the position thereof on the basis of the received reference point signals. The control circuit 3 obtains, from the content information 8, information regarding a part (e.g., a pixel) of a content to be displayed at the identified position and displays the part of the content on the display device 2. The light sources 1 thus autonomously perform content display appropriately in accordance with the positions thereof as pixels to collectively draw an optical content on the field, such as an optical symbol or a moving image.

The position detection unit 4 of each of the light sources 1 receives the reference point signals 7 output from the reference point apparatuses 6, such as radio waves, light, or acoustic waves, to identify the position of the light source 1. The control circuit 3 refers to the content information 8 on the basis of the identified position and determines display data corresponding to the position in order to control the display of the display device 2. The moving light sources 1 operate in this manner and autonomously control content display without being controlled by a central control unit. As a result, the light sources 1 can collectively display an appropriate optical content however the light sources 1 are moving. Fig. 2 illustrates an example in which the plurality of light sources 1 display two rings A and B whose colors are different from each other.

Fig. 3 is a diagram illustrating an example of the content information 8. As described above, the control circuit 3 controls the display of the display device 2 of the light source 1 in accordance with the position and a timing (or a time). For this display control, the content information 8 held by each of the light sources 1 includes information regarding the entirety of an optical content as illustrated in Fig. 3. More specifically, the content information 8 includes light emission information regarding the display device 2 associated with positions (p) and times (t). In the example illustrated in Fig. 3, the amount of light to be emitted is specified for each of three primary colors of R, G, and B as the light emission information regarding the display device 2.

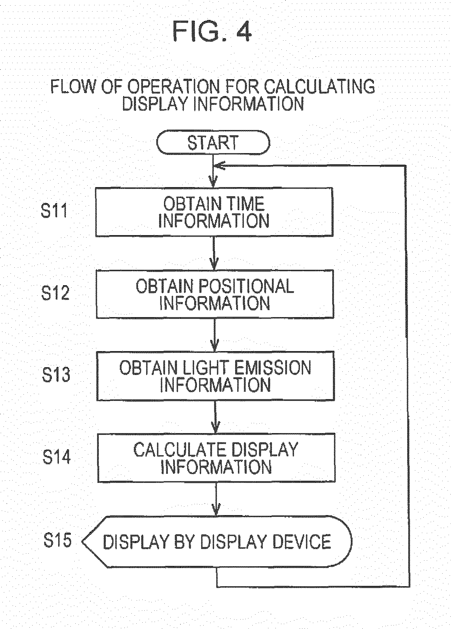

Fig. 4 is a flowchart illustrating an operation performed when the control circuit 3 of a light source 1 controls the display of the display device 2 using the content information 8.

The control circuit 3 obtains information regarding a present time using a clock function (S11) and also obtains, from the position detection unit 4, current positional information regarding the light source 1 (S12). The control circuit 3 includes, for example, a clock circuit that generates time information. The position detection unit 4 calculates the current positional information regarding the light source 1 on the basis of a positional relationship between one or a plurality of reference point apparatus 6 and the position detection unit 4 (details will be described later).

Furthermore, the control circuit 3 accesses the content information 8 illustrated in Fig. 3 and obtains, for example, light emission information (e.g., RGB values) associated with a time close to the present time and a position close to a current position (S13). That is, the control circuit 3 obtains, from the content information 8, a part of information regarding corresponding to the present time and the current position.

The control circuit 3 calculates, on the basis of the obtained light emission information, display information regarding a content to be displayed by the light source 1 at the present time and the current position (S14) and controls the display of the display device 2 on the basis of the display information (S15). As a result, the display device 2 displays a desired content. If the actual present time and/or the actual current position and the time information and/or the positional information specified in the content information 8 do not perfectly match in the calculation of the display information (S14), the display information may be calculated by performing interpolation on the basis of information regarding times around the present time and/or a plurality of positions close to the current position.

### 2.1 Detection of Position of Light Source

In the operational flow, the position detection unit 4 plays an important role of determining positional accuracy in the display of an optical content. If the position detection unit 4 is not required to achieve a high positional accuracy, the reference point apparatuses 6 are not necessarily needed, and the position of the light source 1 may be detected using, for example, a GPS (Global Positioning System) function. That is, the position detection unit 4 may include an antenna that receives a signal from a GPS satellite and a processing circuit that outputs positional information on the basis of the received signal. Alternatively, the position detection unit 4 may employ a quasi-zenith satellites system. That is, the antenna of the position detection unit 4 may receive a signal from a quasi-zenith satellite, and the processing circuit of the position detection unit 4 may output positional information on the basis of the signals received from the GPS satellite and the quasi-zenith satellite.

On the other hand, in order to achieve content display whose positional accuracy is high, the position detection accuracy of the position detection unit 4 needs to be high. In the present embodiment, the position detection unit 4 achieves accurate position detection by calculating positional relationships between the light source 1 and the plurality of reference point apparatuses 6.

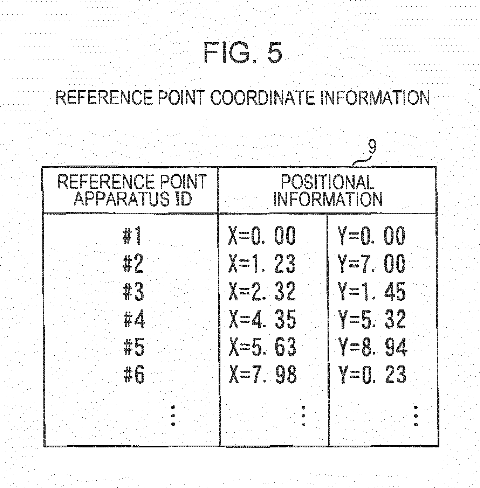

Fig. 5 is a diagram illustrating an example of the reference point coordinate information 9 stored in the storage unit 5 of a light source 1. In the example illustrated in the figure, the reference point coordinate information 9 manages ID numbers of the reference point apparatuses 6 and positional information (X and Y coordinates) regarding the reference point apparatuses 6. The control circuit 3 obtains position coordinates of the light source 1 on the basis of the positional relationships between the plurality of reference point apparatuses 6 and the light source 1 calculated on the basis of reference point signals received from the plurality of reference point apparatuses 6 and the coordinate information regarding the reference point apparatuses 6 stored in the reference point coordinate information 9. As a result, the position coordinates of the light source 1 can be accurately calculated.

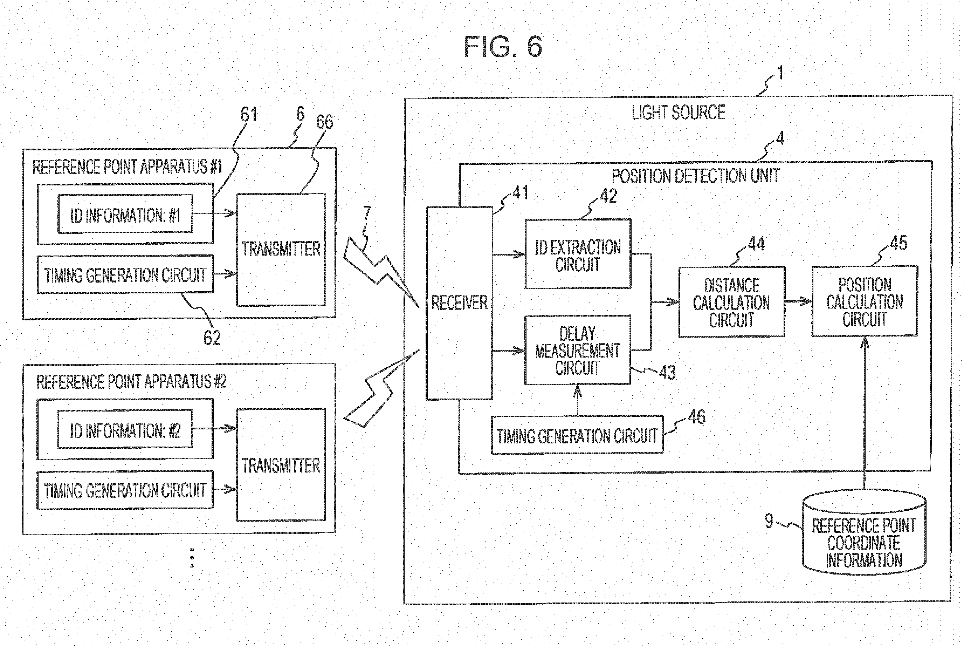

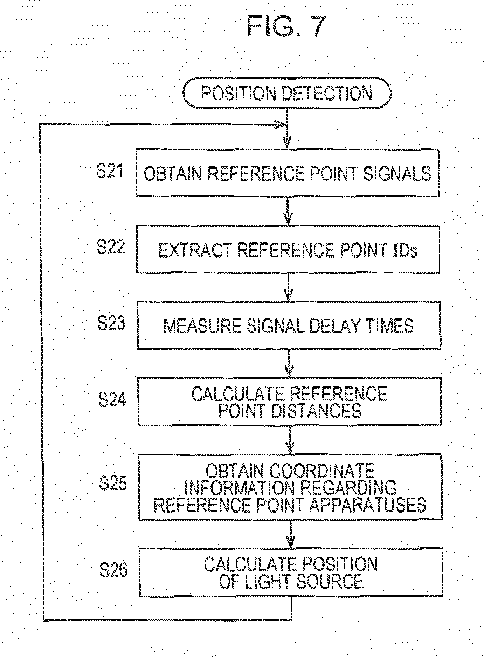

Fig. 6 is a diagram illustrating the specific configuration of the position detection unit 4 of the light source 1 and the reference point apparatuses 6. Fig. 7 is a flowchart illustrating an operation performed by the position detection unit 4 to calculate the positional information regarding the light source 1 on the basis of reference point signals from the reference point apparatuses 6.

As illustrated in Fig. 6, each of the reference point apparatuses 6 includes a storage unit 61 storing ID information unique thereto, a timing generation circuit 62 that generates a certain timing, and a transmitter (or a transmission circuit) 66 that superimposes the ID information upon a signal such as a radio wave, light, or an acoustic wave and that transmits the signal. The storage unit 61 may be a semiconductor storage device such as a flash memory, or may be a hard disk.

On the other hand, the position detection unit 4 of the light source 1 includes a receiver (or a receiving circuit) 41, an ID extraction circuit 42, a delay measurement circuit 43, a distance calculation circuit 44, a position calculation circuit 45, and a timing generation circuit 46.

The operation of the position detection unit 4 will be described hereinafter with reference to the flowchart of Fig. 7.

The reference point apparatuses 6 transmit the reference point signals 7 including the ID information thereon at the certain timings generated by the timing generation circuits 62 thereof through the transmitters 66 thereof. The receiver 41 of the position detection unit 4 receives the reference point signals 7 from the reference point apparatuses 6 (S21). The ID extraction circuit 42 extracts the ID information (hereinafter referred to as "reference point IDs") regarding the reference point apparatuses 6 from the received reference point signals (S22). The ID extraction circuit 42 refers to the reference point coordinate information 9 and obtains positional information corresponding to the extracted reference point IDs to determine the positions of the reference point apparatuses 6.

Meanwhile, the delay measurement circuit 43 measures delay times taken for the reference point signals 7 transmitted from the reference point apparatuses 6 to reach the light source 1 (S23).

Here, the timing generation circuits 62 and 46 of the reference point apparatuses 6 and the light source 1 (position detection unit 4), respectively, are clocks having a role of matching their temporal timings. The timings need to be synchronized in advance so that the timing generation circuits 62 and 46 of the reference point apparatuses 6 and the light source 1 (position detection unit 4), respectively, maintain a state in which the timings match. The timings of the timing generation circuits 62 and 46, therefore, are preset in the reference point apparatuses 6 and the position detection unit 4, respectively, such that the timing generation circuits 62 of the reference point apparatus 6 and the timing generation circuit 46 of the position detection unit 4 synchronize.

The reference point apparatuses 6 begin to transmit the signals 7 at the predetermined timings. The delay measurement circuit 43 of the position detection unit 4 measures the delay times taken from the predetermined timings until the signals are received. The distance calculation circuit 44 calculates distances between the reference point apparatuses 6 and the light source 1 (position detection unit 4) on the basis of the calculated delay times (S24). In subsequent processing, reference point IDs of X (a certain number) reference point apparatuses 6, namely a reference point apparatus 6 closest to the light source 1 to an X-th closest reference point apparatus 6, may be used.

On the other hand, the position calculation circuit 45 of the position detection unit 4 accesses the reference point coordinate information 9 and obtains positional information (that is, coordinate information) corresponding to the reference point IDs obtained by the ID extraction circuit 42 (S25).

The position calculation circuit 45 then calculates the position of the light source 1 on the basis of the positional information regarding the reference point apparatuses 6 and information regarding the distances to the reference point apparatuses 6 calculated by the distance calculation circuit 44 (S26). Positional information regarding the light source 1 calculated in this manner is transmitted to the control circuit 3.

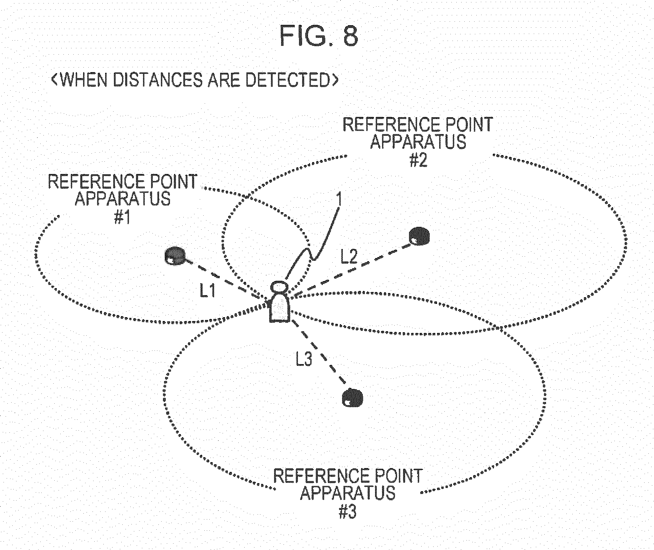

Fig. 8 is a diagram illustrating a principle of a method (step S26) for identifying a position of a light source 1 on the basis of results of calculation of distances between a plurality of reference point apparatuses 6 located close to the light source 1 and the light source 1. Here, among reference point apparatuses #1 to #3, the reference point apparatus #1 is a reference point apparatus closest to the light source 1.

If the measured distance between the reference point apparatuses #1 and #2 and the light source 1 are L1 and L2, respectively, positions of two intersections between a circle with a radius of L1 whose center is a position of the reference point apparatus #1 and a circle with a radius of L2 whose center is a position of the reference point apparatus #2 are calculated as candidates for the position of the light source 1. In addition, by learning a distance L3 from the other reference point apparatus #3, a candidate for the position of the light source 1 can be identified. That is, the distance calculation circuit 44 detects distances from at least three reference point apparatuses 6, and the position calculation circuit 45 identifies the position of the light source 1 on the basis of results of the detection and the reference point coordinate information 9.

Furthermore, identification of position candidates may be repeated in the same manner on the basis of other combinations of the reference point apparatus 6, and the accuracy of identifying position candidates may be improved on the basis of the plurality of position candidates calculated. For example, a value obtained by weighting and averaging position candidates calculated from a combination of the reference point apparatuses #1 and #2, position candidates calculated from a combination of the reference point apparatuses #1 and #3, and position candidates calculated from a combination of the reference point apparatuses #2 and #3 may be obtained as a candidate for the position of the light source 1.

As described above, in the optical content display system 100 in the present disclosure, the plurality of light sources 1 autonomously control emission of light on the basis of the positions thereof. As a result, a large amount of communication need not be performed in order to control a large number of light sources as in the example of the related art. According to the present embodiment, therefore, a desired content can be displayed using moving light sources through simple control.

### 3. Modification

### 3.1 Another Example of Configuration of Position Detection Unit

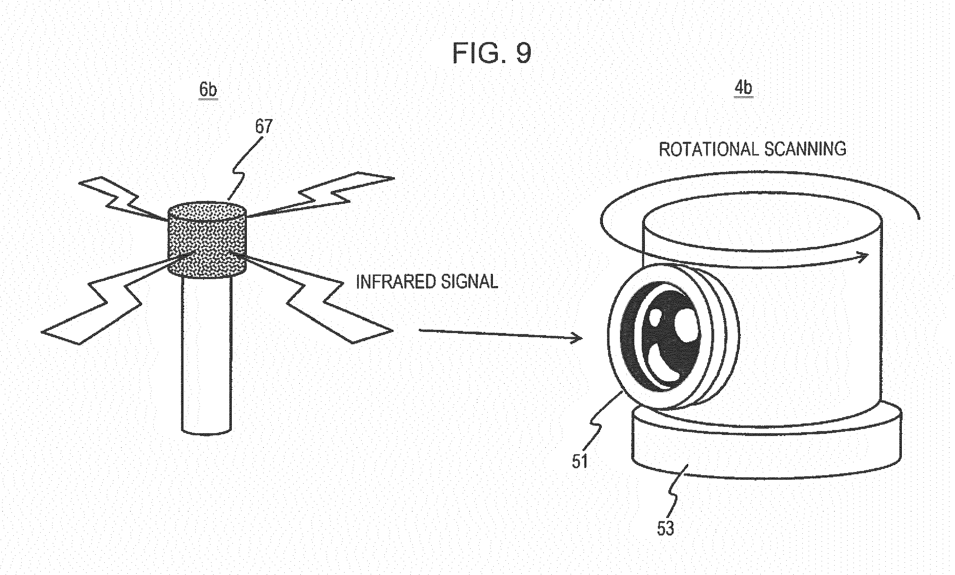

In the first embodiment, the position detection unit 4 of each light source 1 measures the distances between the light source 1 and the reference point apparatuses 6 in order to calculate the positional information regarding the light source 1. In a present modification, a position detection unit 4b of each light source 1 measures directions of reference point apparatuses 6b from the light source 1 in order to calculate positional information regarding the light source 1. Figs. 9 to 12 are diagrams illustrating a configuration and an operation for calculating the positional information regarding the light source 1 by measuring the directions of the reference point apparatuses 6b from the light source 1.

Fig. 9 illustrates an example of the configuration of the position detection unit 4b that measures the directions of the reference point apparatuses 6b in order to detect the position of the light source 1 and the configuration of one of the reference point apparatuses 6b. Each of the reference point apparatuses 6b includes, as a transmitter, an infrared transmitter 67 that outputs an infrared signal. The position detection unit 4b includes, as a receiver, an infrared camera 51 capable of capturing an image of infrared light and a driving mechanism 53 for causing the infrared camera to perform 360° rotational scanning. The position detection unit 4b can measure directions in which infrared signals have been received from the reference point apparatuses 6 on the basis of the infrared signals.

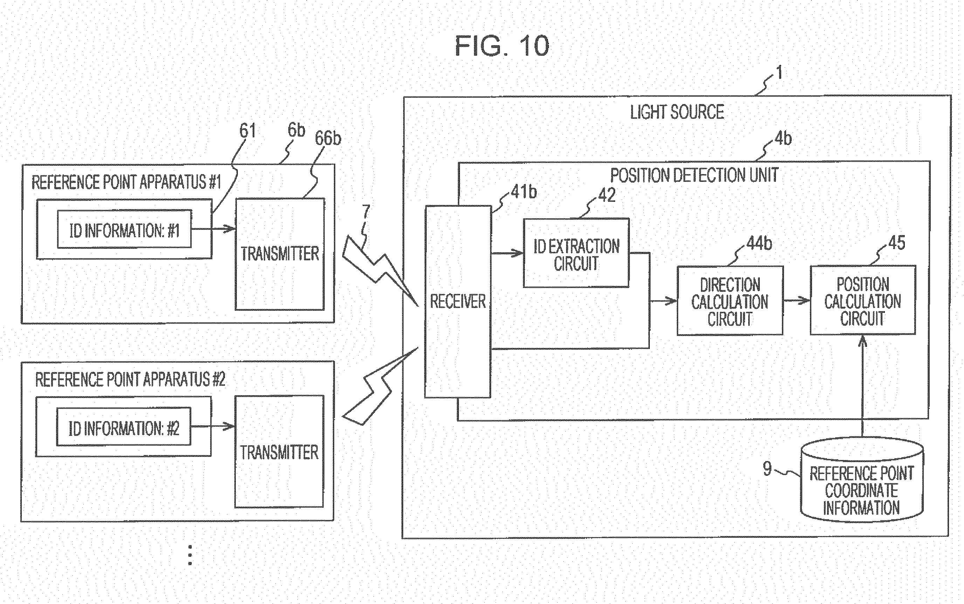

Fig. 10 illustrates the specific configuration of the reference point apparatuses 6b and the position detection unit 4b. Each of the reference point apparatuses 6b holds unique ID information in the storage unit 61 and transmits the information from a transmitter 66b while including the information in a reference point signal 7. The reference point signal 7 includes the unique ID information.

The position detection unit 4b includes a receiver 41 b, the ID extraction circuit 42, a direction calculation circuit 44b, and the position calculation circuit 45. The position detection unit 4b changes a direction of the receiver 41 b (that is, the infrared camera 51) by 360 degrees like a radar. As a result, the position detection unit 4b receives the reference point signals 7 from the reference point apparatuses 6 while changing, by 360 degrees, the direction in which the reference point signals 7 can be received. The position detection unit 4b extracts the ID information (reference point IDs) regarding the reference point apparatuses 6b included in the received reference point signals 7. In addition, the position detection unit 4b measures directions of reference points (positions of the reference point apparatuses 6b) from directions of the receiver 41 b at times when the reference point signals have been received and generates direction information. The position detection unit 4b accesses the reference point coordinate information 9 and obtains positional information (coordinate information) corresponding to the obtained reference point IDs. The position detection unit 4b calculates the position of the light source 1 on the basis of the direction information and the position information regarding the reference point apparatuses and transmits the positional information regarding the light source 1 to the control circuit 3.

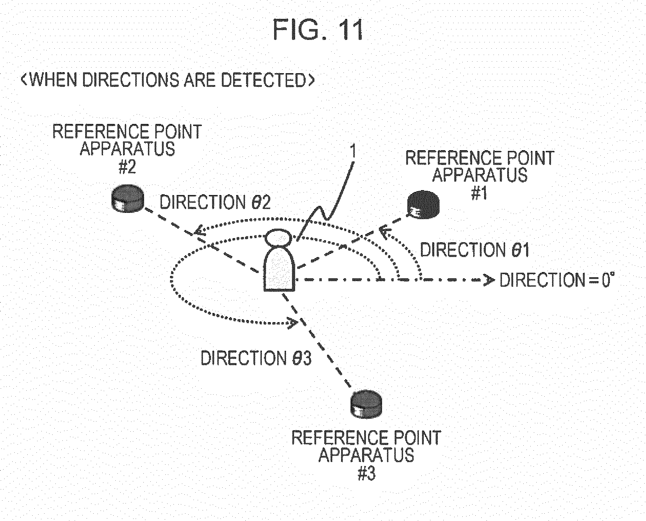

Fig. 11 is a diagram illustrating an operation for identifying the position of the light source 1 from measurement of directions of a plurality of reference point apparatuses 6b.

The position detection unit 4b of each light source 1 can calculate directions of reference point apparatus 6b from directions in which the receiver 41 b has received reference point signals from the reference point apparatus 6b. For example, the position detection unit 4b of each light source 1 detects a direction in which a signal from each reference point apparatus 6b reaches most intensely as a direction of the reference point apparatus 6b while causing the receiver 41 b having high directivity to perform rotational scanning from a direction 0° to 360°.

If the position detection unit 4b has measured a direction θ1 of the reference point apparatus #1, a direction 02 of the reference point apparatus #2, and a direction θ3 of the reference point apparatus #3, it can be seen that the reference point apparatuses #1 to #3 exist on straight lines extending from the light source 1 in the directions θ1, θ2, and θ3, respectively. The position of the light source 1 that satisfies a condition that the three reference point apparatuses #1 to #3 exist on these straight lines in the three directions can be uniquely identified. That is, by obtaining position coordinate information regarding the reference point apparatuses #1, #2, and #3 from the reference point coordinate information 9 held in advance, the position of the light source 1 can be calculated. Since direction scanning starts from a certain direction (reference direction) relative to the light source 1, namely 0°, the coordinate position of the light source 1 relative to the reference point apparatuses #1, #2, and #3 can be identified, and information regarding directions of the light source 1 relative to the reference point apparatuses #1, #2, and #3 can be obtained.

Furthermore, as in the case of the distance detection, the accuracy of detecting the position of the light source can be further improved by detecting direction information regarding more reference point apparatus 6b. If the direction calculation circuit 44b detects directions of at least two reference point apparatuses 6b, the position calculation circuit 45 can identify the position of the light source 1 on the basis of results of the detection and the reference point coordinate information 9.

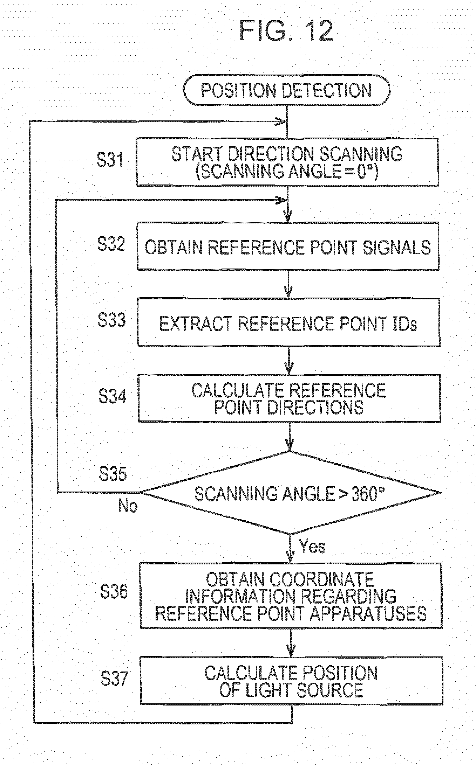

An operation performed by the position detection unit 4 to detect the position of the light source 1 by detecting the directions of the reference point apparatuses 6b will be described with reference to the flowchart of Fig. 12.

The position detection unit 4b receives the reference point signals 7 from the reference point apparatuses 6b (S32) while rotationally changing the direction of the receiver 41 b (e.g., the infrared camera 51) (S31 and S35). The ID extraction circuit 42 extracts reference point IDs of the reference point apparatuses 6b from the received reference point signals (S33). For example, the ID extraction circuit 42 may determine the distances between the light source 1 and the reference point apparatuses 6b on the basis of peak intensities of the received reference point signals 7 and extract reference point IDs of only a reference point apparatus 6b closest to the light source 1 to a Y-th (a certain number) closest reference point apparatus 6b.

Meanwhile, the direction calculation circuit 44b calculates the directions of the reference point apparatuses 6 on the basis of intensities of the reference point signals 7 received from the reference point apparatuses 6. That is, the direction calculation circuit 44b detects the direction of the receiver 41 b at a time when a reception intensity of a reference point signal 7 including a certain reference point ID as a direction of a reference point apparatus 6 identified by the reference point ID (S34).

The position calculation circuit 45 accesses the reference point coordinate information 9 and obtains, for the reference point apparatuses 6b whose reference point IDs have been extracted, positional information (coordinate information) regarding corresponding to the reference point IDs obtained by the ID extraction circuit 42 (S36).

The position calculation circuit 45 then calculates the position of the light source 1 on the basis of the positional information regarding the reference point apparatuses 6 and the directions of the reference point apparatuses 6 calculated by the direction calculation circuit 44b (S37).

Although an example in which infrared radiation is used as a medium for signals has been described in the above configuration in which the directions of the reference point apparatus 6b are detected, the medium for signals is not limited to infrared radiation. The transmitter 66b of each reference point apparatus 6b may transmit a signal of another medium, and the receiver 41 of the position detection unit 4b may receive the signal of that medium, instead. For example, another medium such as radio waves, light, or acoustic waves may be used as the medium for signals.

Here, if radio waves or acoustic waves are used and transmission level is high, electromagnetic interference or noise might be caused. It is desirable, therefore, to use a method by which a light source can certainly receive a signal even if signal level is low. For this purpose, a method like spread spectrum communication in which a signal is evenly spread over a wide frequency band and signal level at particular frequencies is suppressed may be used.

In addition, in the case of the configuration in which distances between reference point apparatuses 6 and a light source 1 are measured on the basis of signal delay times, if radio waves or light is used as the medium for signals, measurement of an extremely short period of time needs to be performed, since radio waves or light travels at light speed. Acoustic waves, therefore, can be used as the medium for signals. Since acoustic waves are slow, namely about 300 m per second, a high accuracy of 3 cm can be achieved in measurement in a measurement time of 0.1 ms. When acoustic waves are used, it is desirable to use ultrasonic waves having a frequency higher than an audible range in order not to cause noise. In addition, the position detection unit 4 may, as with the position detection unit 4b, measure directions of the reference point apparatuses 6 from the light source 1 as well as the distances between the reference point apparatuses 6 and the light source 1 on the basis of signal delay times. As a result, the position of the light source 1 can be detected just by detecting one reference point apparatus 6.

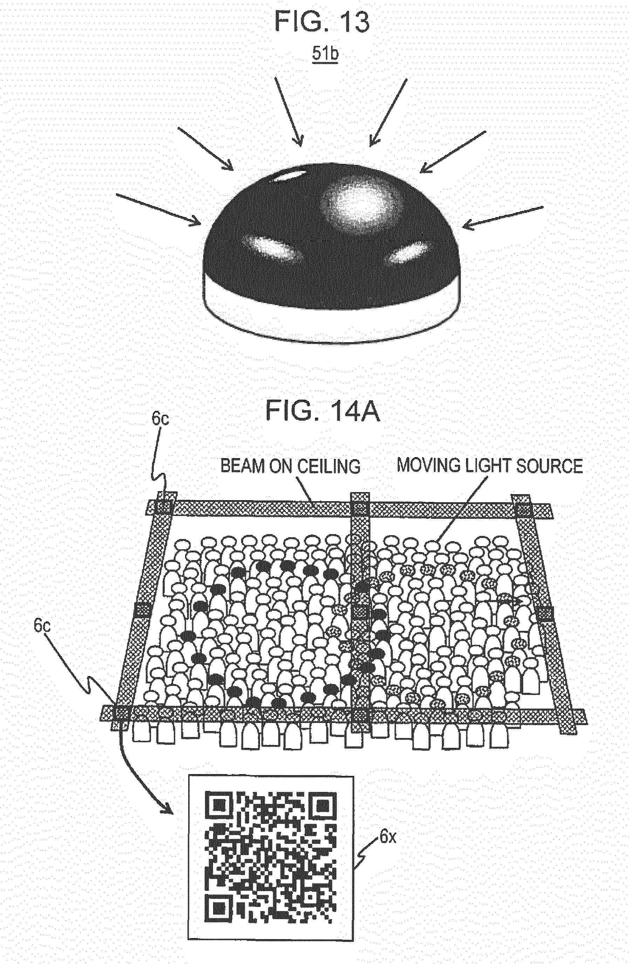

On the other hand, in the case of the configuration in which directions of reference point apparatuses 6b from a light source 1 are measured, it is desirable to use signals whose straightness is high, such as light or radio waves, not acoustic waves. If signals such as light or radio waves are used, a high-resolution device such as an image sensor can be used, and directions can be accurately detected. For example, as illustrated in Fig. 13, a super-wide angle camera 51 b that can be directed upward or 360°, such as an omnidirectional camera, may be used as the receiver of the position detection unit 4. As a result, directions of all reference point apparatuses 6 located around a light source 1 can be detected at once without performing rotational scanning. In this case, the direction calculation circuit 44b recognizes images of the reference point apparatuses 6 in an overall image obtained by the super-wide angle camera 51b and identifies the directions of the reference point apparatuses 6.

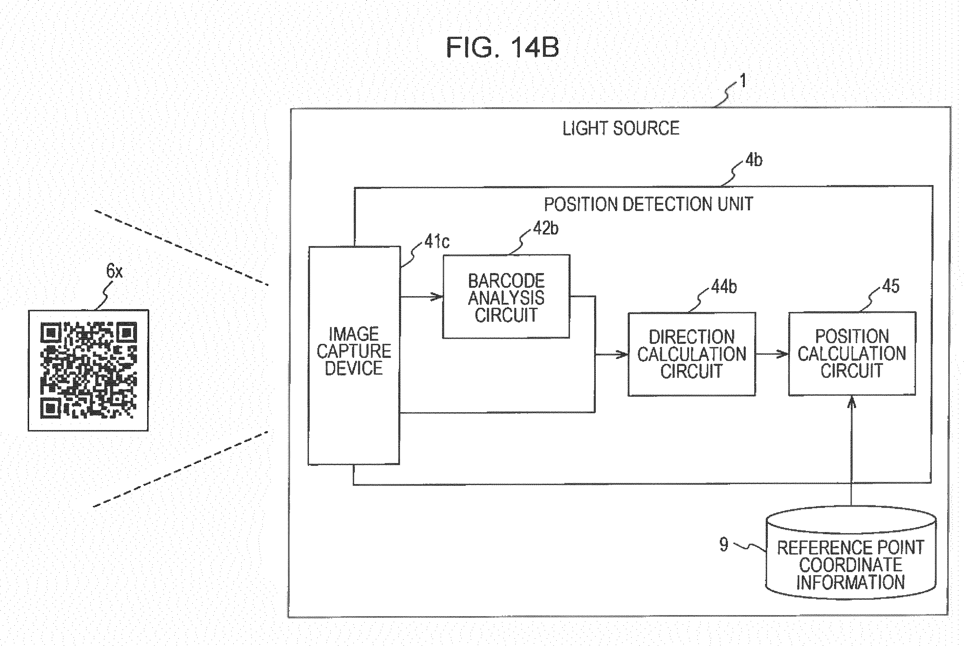

In addition, the reference point apparatuses need not necessarily be configured by apparatuses that actively output reference point signals. For example, as illustrated in Fig. 14A, a plurality of reference point apparatuses 6c may be configured by two-dimensional barcodes (or QR codes (registered trademark)) 6x or the like indicating unique ID information (reference point IDs). That is, reference point apparatuses 6c display the two-dimensional barcodes (or QR codes (registered trademark)) 6x or the like indicating unique ID information (reference point IDs) thereon. In this case, the position detection unit 4b of each light source 1 has a configuration illustrated in Fig. 14B. That is, an imaging device (e.g., an omnidirectional camera) 41 c that captures an image and a barcode analysis circuit 42b capable of analyzing two-dimensional barcodes are provided instead of the receiver 41 b and the ID extraction circuit 42 in the configuration of the position detection unit 4b of the light source 1 illustrated in Fig. 10. The plurality of two-dimensional barcodes 6x are posted on places that can be easily seen from each light source 1, such as beams on a ceiling of an event site. The imaging device 41c of each light source 1 captures images of the plurality of two-dimensional barcodes 6x, and the barcode analysis unit 42b extracts ID information by analyzing the two-dimensional barcodes whose images have been captured. Positions of the reference point apparatuses 6c are then identified on the basis of the ID information, and directions of the reference point apparatuses 6c are measured using the method illustrated in Fig. 12 or the like, in order to identify the position of the light source 1.

### 3.2 Movable Reference Point Apparatuses

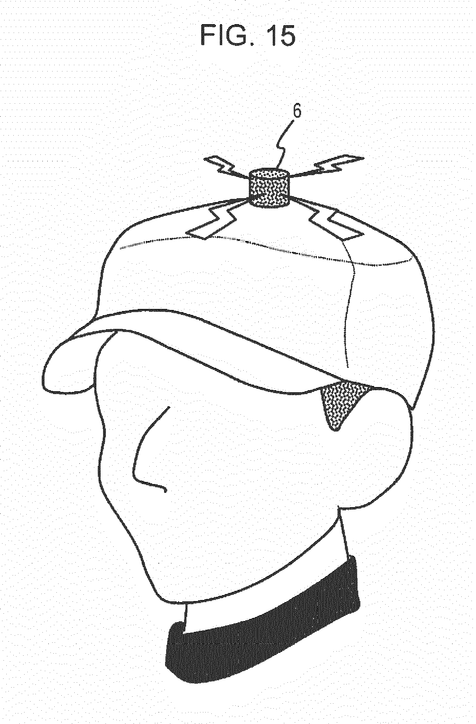

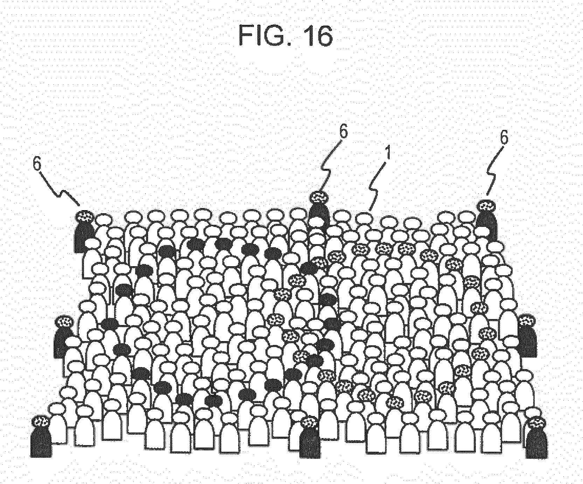

Although an example in which the positions of the reference point apparatuses 6, 6b, and 6x do not change and the reference point apparatuses 6, 6b, and 6x exist at fixed positions has been described in the above example, the reference point apparatuses 6, 6b, and 6x may move, instead. An example in which the reference point apparatuses 6 move will be described hereinafter, but the reference point apparatuses 6b and 6x may also move. For example, as illustrated in Fig. 15, each reference point apparatus 6 may be worn by a person. In this case, as illustrated in Fig. 16, the reference point apparatuses 6 may move in a crowd of people who wear the light sources 1 in accordance with the movement of the crowd, that is, the light source 1. In this case, in the reference point coordinate information 9 held by each light source 1, coordinate information regarding the reference point apparatus 6 that have moved needs to be updated.

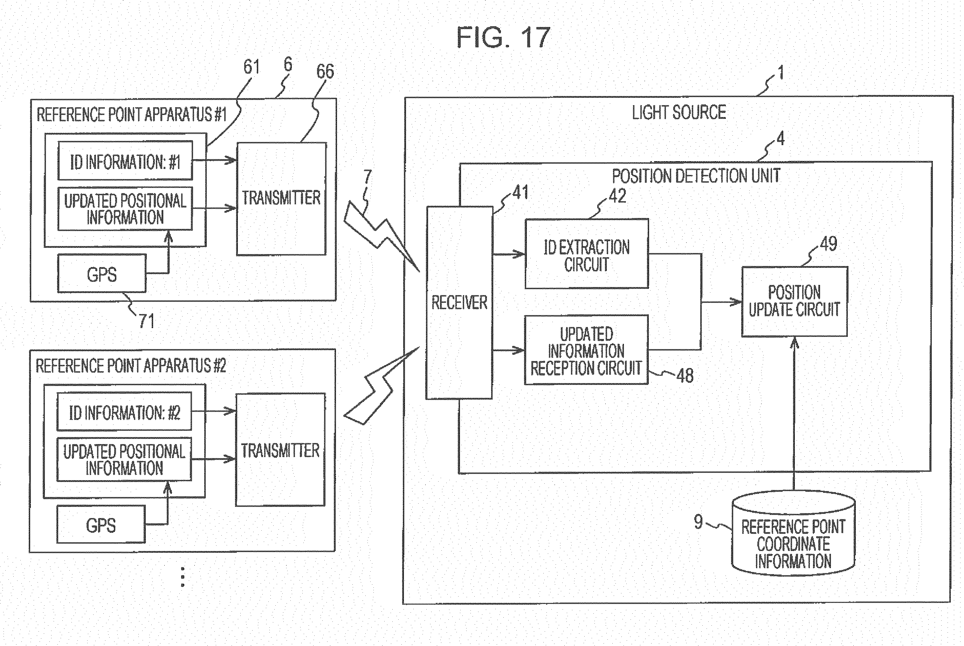

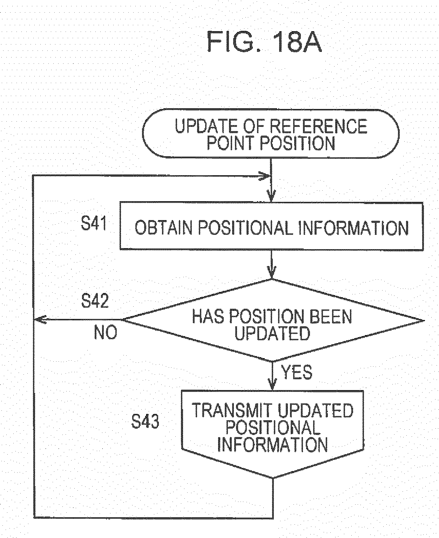

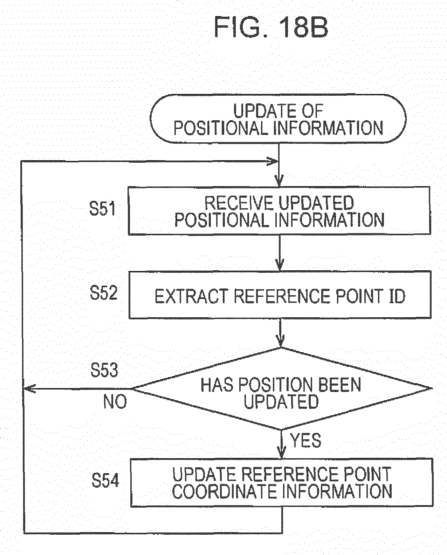

A method for updating coordinate information regarding a reference point apparatus 6 that has moved will be described with reference to Figs. 17, 18A, and 18B. Fig. 17 is a diagram illustrating a configuration for updating the coordinate information regarding the reference point apparatus 6. Figs. 18A and 18B are flowcharts illustrating the operation of the reference point apparatus 6 and the position detection unit 4 of the light source 1 relating to update of positional information regarding the reference point apparatus 6.

As illustrated in Fig. 17, each reference point apparatus 6 further includes a GPS unit 71. The GPS unit 71 is an example of means for obtaining positional information regarding the reference point apparatus 6. The GPS unit 71 includes a GPS antenna that receives a radio wave from a GPS satellite and a GPS circuit that generates positional information on the basis of a signal received by the GPS antenna. The position detection unit 4 of the light source 1 further includes an updated information receiving circuit 48 and a position update circuit 49.

As illustrated in Fig. 18A, the reference point apparatus 6 also holds updated positional information as well as the unique ID information. The reference point apparatus 6 obtains positional information thereon from the GPS unit 71 (S41) and determines, on the basis of the obtained positional information, whether the position thereof has been updated (S42). That is, the reference point apparatus 6 compares the positional information obtained from the GPS unit 71 and the positional information recorded in the storage unit 61 and, if these pieces of positional information differ, overwrites the positional information recorded in the storage unit 61 with the positional information obtained from the GPS unit 71. If there is an update, the reference point apparatus 6 superimposes information (updated positional information) indicating the position thereof to be updated upon the reference point signal 7 and transmits the reference point signal 7 through the transmitter 66 (S43). That is, after overwriting the positional information recorded in the storage unit 61, the reference point apparatus 6 includes the new positional information in the reference point signal 7 as the updated positional information and transmits the reference point signal 7 to the light source 1.

As illustrated in Fig. 18B, the position detection unit 4 of the light source 1 receives the reference point signal 7 from the reference point apparatus 6 with the receiver 41 (S51). The ID extraction circuit 42 extracts the ID of the reference point apparatus 6 from the reference point signal 7 (S52). The updated information receiving circuit 48 extracts the updated positional information from the reference point signal 7. The position update circuit 49 determines, on the basis of the extracted information, whether the positional information regarding the reference point apparatus 6 has been updated (S53). That is, the position update circuit 49 obtains positional information corresponding to the extracted ID information from the storage unit 5 and compares the obtained positional information and the extracted updated positional information. If these pieces of information differ, the position update circuit 49 determines that the position of the reference point apparatus 6 identified by the ID has been updated. If there is an update, the position update circuit 49 updates coordinate information regarding a reference point corresponding to the extracted ID in the reference point coordinate information 9 (S54). That is, the position update circuit 49 overwrites the coordinate information stored in the storage unit 5 with the updated positional information.

With the above configuration, the reference point coordinate information 9 can be continuously updated even if a reference point apparatus 6 moves, and an optical content can continue to be appropriately shown. The optical content, therefore, can be shown while changing positions at which reference point apparatuses and light sources are located, for example, in a stadium or on a ground. In an entry parade of a sport event or the like, an optical content can be shown in accordance with the entry parade by making players wear the light sources 1 in the present disclosure and flag-bearers or staff members holding placards or the like wear the reference point apparatuses 6. As a result, the event can be enlivened.

### 3.3 Switching of Display Pattern of Content

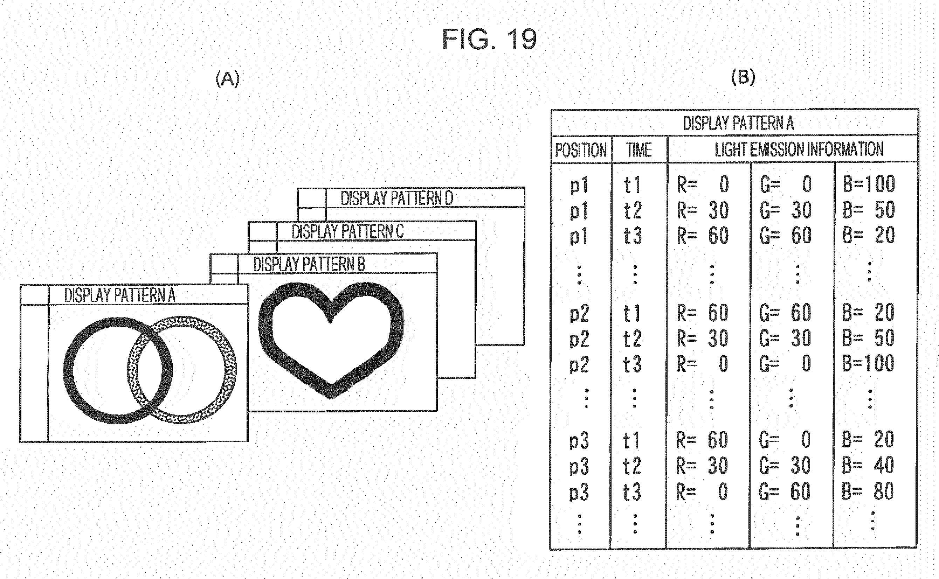

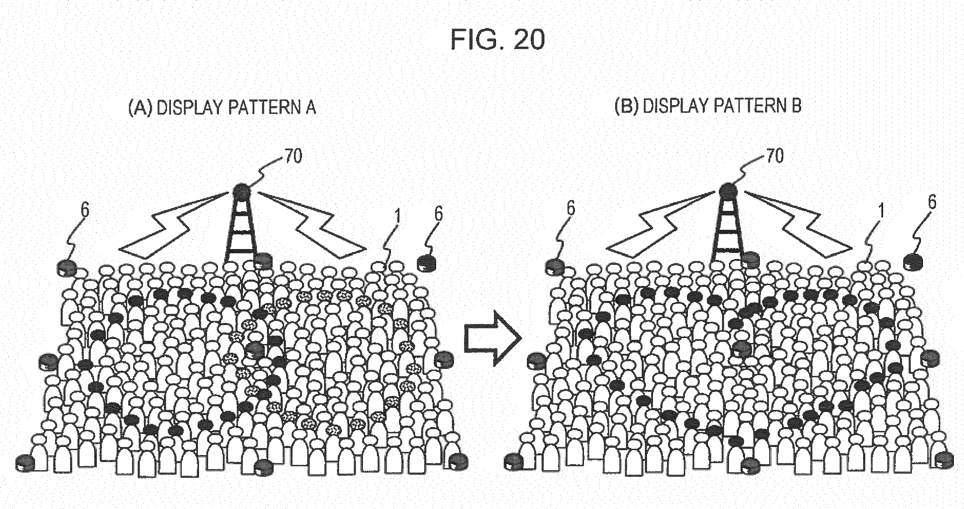

When an optical content is shown in an event, the event might not necessarily progress as scheduled, and an unexpected happening can occur during the event. A method used in such a case will be described with reference to Figs. 19 and 20.

Fig. 19(A) is a diagram illustrating the content information 8 including a plurality of display patterns of contents. In Fig. 19(A), the plurality of display patterns of contents included in the content information 8 are schematically illustrated. Fig. 19(B) is a diagram illustrating an example of content information corresponding to one of the display patterns. As illustrated in Fig. 19(A), the content information 8 held in advance by a light source 1 is pieces of information (pattern information) indicating the plurality of display patterns. Each of the pattern information is information indicating a display pattern of the entirety of a content achieved by a plurality of light sources 1 and includes information that can display a partial pattern provided by the light source 1. Each piece of pattern information may be information regarding a still image such as an illustration or a photograph or may be information regarding a moving image such as an animation or a movie.

Fig. 20 is a diagram illustrating examples of display of contents performed by the plurality of light sources 1. Fig. 20(A) illustrates an example at a time when the plurality of light sources 1 display a content of Display Pattern A, and Fig. 20(B) illustrates an example at a time when the plurality of light sources 1 display a content of Display Pattern B. When optical contents are actually shown in an event or the like, an instruction apparatus 70 that indicates a display pattern to be shown may be provided as illustrated in Fig. 20. The instruction apparatus 70 transmits, to all the light sources 1 through wireless communication, instructions indicating pattern information regarding a content to be displayed next. In the instructions, the pattern information regarding the content to be displayed next and a time at which the content indicated by the pattern information begins to be displayed are specified. Upon receiving the instructions, the light sources 1 select the pattern information regarding the content to be displayed next from the content information 8 on the basis of the received instructions. The light sources 1 then begin to display the content indicated by the selected pattern information at the time specified in the instructions. For example, if the instruction apparatus 70 transmits, to the light sources 1, instructions indicating that Display Pattern B is to be displayed at a specified time while Display Pattern A is displayed as illustrated in Fig. 20(A), the light sources 1 simultaneously begin to display Display Pattern B at the specified time as illustrated in Fig. 20(B).

With this configuration, various display patterns that can be used in an event can be prepared, and desirable display patterns can be selected as necessary as the event progresses. As a result, optical contents can be shown in a lively manner in accordance with the progress of the event and timings. The event, therefore, can be more strongly enlivened than when a predetermined content is displayed. In addition, by preparing display patterns in consideration of happenings, unexpected happenings can be eliminated since the instruction apparatus 70 can control the display pattern using appropriate patterns even if such happenings occur during the event.

### 3. 4 Another Example of Display Device

In the above-described example, an example has been described in which the display device 2 of each light source 1 functions as a pixel included in the entirety of a light-emitting device. According to the present disclosure, however, the display device 2 may display the entirety of a content. For example, the display device 2 may be configured by a display device capable of displaying an image generated by a plurality of pixels. When a plurality of light sources each including such a display device cooperate to display a content, an optical content that displays a larger image content can be shown.

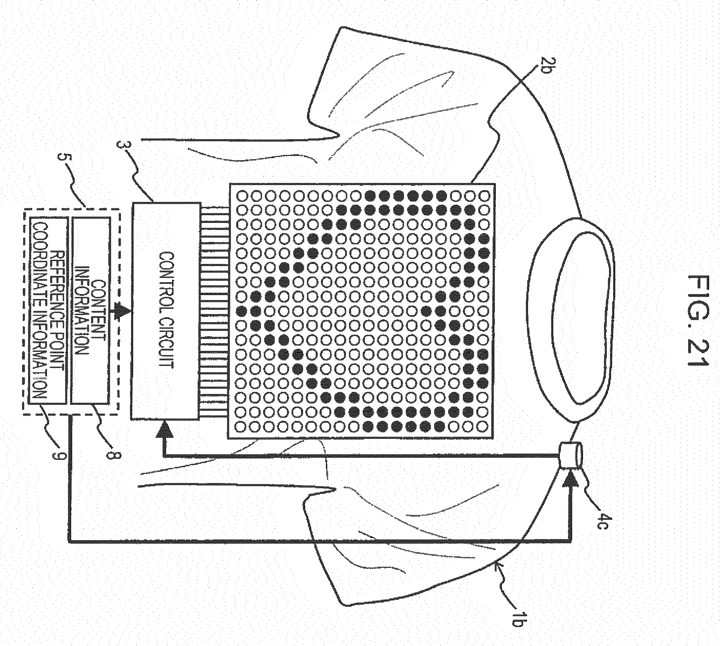

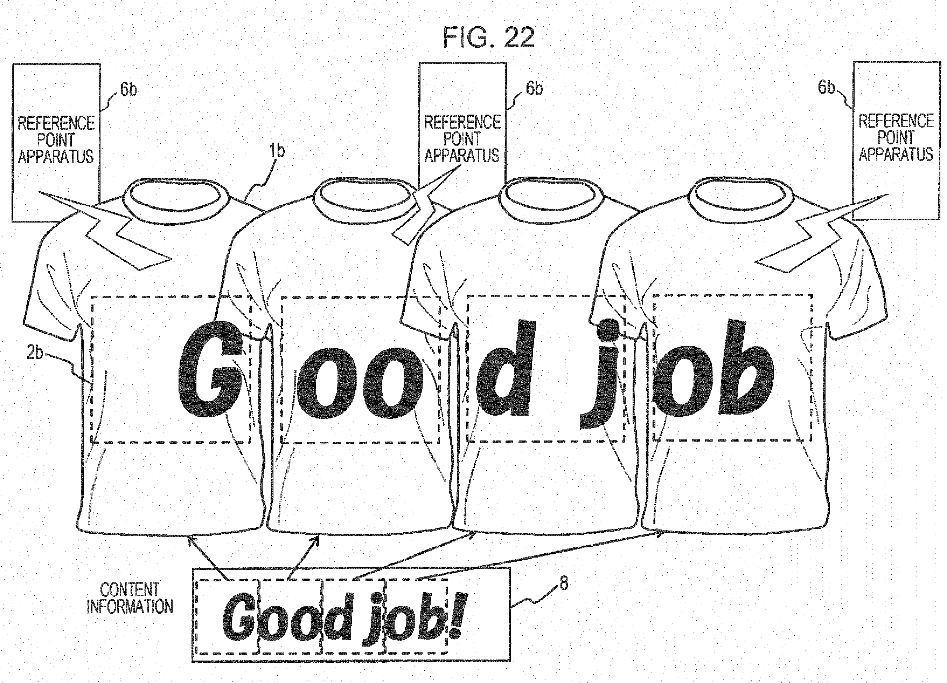

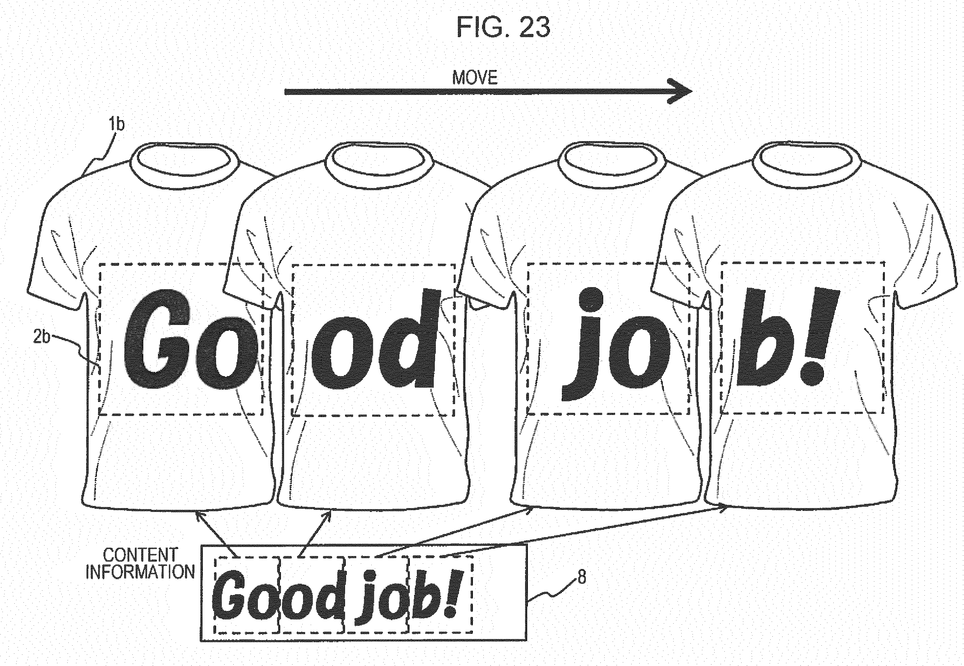

Fig. 21 illustrates an example of the configuration of such a light source 1 b. The light source 1b includes a display device 2b in which a large number of LEDs are arranged in rows and columns. The display device 2b has a function of displaying an image content such as a still image or a moving image using the plurality of LEDs arranged in a matrix. A position detection unit 4c has the same configuration and function as the position detection unit 4b, which has been described with reference to Figs. 9 to 11, that detects a position on the basis of directions of reference point apparatuses 6b. Figs. 22 and 23 illustrate examples of display of an image content displayed in a cooperative manner using a plurality of light sources 1 b. In this case, as illustrated in Figs. 22 and 23, emission of light of each of light-emitting devices included in display devices 2b needs to be controlled. In the content information 8, therefore, light emission information is specified in units of a plurality of LEDs arranged in a matrix.

With the configuration for detecting a position on the basis of directions of reference point apparatuses 6b described with reference to Figs. 9 to 11, the position detection unit 4b of each light source 1 can obtain directions of a plurality of reference point apparatuses 6b on the basis of reference point signals from the plurality of reference point apparatuses 6b and can accurately calculate a position of the light source 1 and a direction thereof. The light source 1 b can therefore identify a position and a direction more accurately than the screen size of the display device 2b using such a configuration.

As illustrated in Fig. 22, when each light source 1b identifies a position and a direction more accurately than the screen size of the corresponding display device 2b, a partial image to be displayed by the light source 1 b in content information regarding the entirety of an image to be displayed can be accurately identified and displayed. When a plurality of light sources 1 b that each display a partial image gather and display an image, an image content can be collectively displayed. As illustrated in Fig. 22, for example, when each light source 1b displays a part of a text, a text content "Good job" can be collectively displayed. Furthermore, each light source 1 b determines, on the basis of a current position thereof, the content to be displayed. As illustrated in Fig. 23, therefore, even if the light sources 1 b move from a state illustrated in Fig. 22, the light sources 1 b can collectively continue to display a desired content by displaying partial images to be displayed thereby at new positions.

Although a cap or a shirt is used as a light source 1 in the above embodiment and modification, a light such as a penlight or a lantern may be used as a light source 1, instead. Alternatively, a fan, a balloon, a ball, an umbrella, a pole, a piece of cheering paraphernalia, or the like may be used as a light source 1.

In the present disclosure, the function blocks and the entirety or a part of the circuits illustrated in the block diagrams of Figs. 1, 6, 10, 14B, 17, and 21 may be implemented by one or a plurality of electronic circuits including a semiconductor device, a semiconductor integrated circuit (IC), or an LSI (large scale integration). The LSI or the IC may be integrated as a single chip, or may be configured by combining a plurality of chips. For example, the function blocks other than the storage devices may be integrated on a single chip. Although the term LSI or IC is used here, the term used changes depending on a degree of integration, and terms system LSI, VLSI (very large scale integration), or ULSI (ultra large scale integration) may be used, instead. A Field Programmable Gate Array (FPGA), which is programmed after an LSI is fabricated, or a reconfigurable logic device, which is capable of reconfiguring connection relationships in an LSI or setting up circuit sections inside an LSI can be used for the same purpose.

Furthermore, functions or operations of the entirety or a part of the function blocks and the circuits can be implemented by software processes. In this case, software is recorded on one or a plurality of non-transitory recording media such as ROMs, optical discs, or hard disk drives, and after a processor executes the software, a function specified by the software is executed by the processor and peripheral devices. A system or an apparatus may include the one or plurality of non-transitory recording media on which the software is recorded, the processor, and a necessary hardware device such as an interface.

### 4. Present Disclosure

The above-described embodiment discloses an optical content display system having the following configurations.
(1) An optical content display system includes a plurality of movable light sources. The content display system displays a content using the plurality of light sources. Each of the plurality of light sources includes a display device, a position detector that detects a position of the light source, a storage device storing content information in which a plurality of parts of the content are associated with a plurality of positions at which the plurality of parts are to be displayed, and a control circuit that refers to the content information stored in the storage device, obtains data regarding one of the plurality of parts of the content corresponding to the position of the light source detected by the position detector, and displays the part of the content on the display device.
   In the optical content display system in the present disclosure having the above configuration, each of the plurality of light sources autonomously controls emission of light on the basis of the position thereof. As a result, a desired content can be displayed through simple configuration using the moving light sources without performing a large amount of communication for controlling each of the large number of light sources. In addition, since each of the moving light sources can appropriately display a content, a more elaborate show can be organized in an event such as a concert or a sport event.
(2) The content display system according to (1) may further include a plurality of reference point apparatuses. The position detector may detect the position of the light source by detecting a positional relationship between at least one of the plurality of reference point apparatuses and the light source.
(3) In the content display system according to (2), the storage device may store, in advance, reference point coordinate information including positional information indicating positions of the plurality of reference point apparatuses.
(4) In the content display system according to (3), each of the plurality of reference point apparatuses may include ID information distinguishing the reference point apparatus from the other reference point apparatuses. The reference point coordinate information may include, for the plurality of reference point apparatuses, the ID information associated with the positional information. The position detector may obtain the ID information from at least one of the plurality of reference point apparatus, refer to the reference point coordinate information stored in the storage device, and detect the position of the light source using the positional information corresponding to the obtained ID information.
(5) In the content display system according to any of (2) to (4), the plurality of reference point apparatuses may be movable.
(6) In the content display system according to any of (2) to (5), each of the plurality of reference point apparatuses may include a transmission circuit that transmits a signal. The position detector may include a receiving circuit that receives the signal transmitted from the at least one of the plurality of reference point apparatuses, measure, on the basis of the received signal, a distance between the at least one of the plurality of reference point apparatuses and the light source and a direction of the at least one of the plurality of reference point apparatuses from the light source, and detect the position of the light source on the basis of results of the measurement.
(7) In the content display system according to any of (2) to (5), each of the plurality of reference point apparatuses may include a transmission circuit that transmits a signal. The at least one of the plurality of reference point apparatuses may be at least three of the plurality of reference point apparatuses. The position detector may include a receiving circuit that receives the signals transmitted from the at least three of the plurality of reference point apparatuses, measure distances between the at least three of the plurality of reference point apparatuses and the light source on the basis of delay times taken after the at least three of the plurality of reference point apparatuses transmit the signals until the light source receives the signals, and detect the position of the light source on the basis of results of the measurement.
(8) In the content display system according to any of (2) to (5), each of the plurality of reference point apparatuses may include a transmission circuit that transmits a signal. The at least one of the plurality of reference point apparatuses may be at least two of the plurality of reference point apparatuses. The position detector may include a receiving circuit that receives the signals transmitted from the at least two of the plurality of reference point apparatuses, identify directions of the at least two of the plurality of reference point apparatuses from the light source by identifying directions in which the signals received by the reception unit have been transmitted, and detect the position of the light source on the basis of results of the measurement.
(9) In the content display system according to any of (2) to (5), each of the plurality of reference point apparatuses may include a recognition mark distinguishing the reference point apparatus from the other reference point apparatuses. The at least at least one of the plurality of reference point apparatuses may be at least two of the plurality of reference point apparatuses. The position detector may include an imaging device that captures images of the recognition marks of the at least two of the plurality of reference point apparatuses and an image analysis circuit that identifies directions of the at least two of the plurality of reference point apparatuses by analyzing the captured images of the recognition marks and detect the position of the light source on the basis of the identified directions.
(10) In the content display system according to (1), the position detector may include a GPS circuit and detect the position of the light source using data received by the GPS circuit.
(11) In the content display system according to any of (1) to (10), the content information may be information in which the plurality of parts of the content and the plurality of positions and a plurality of times at which the plurality of parts are to be displayed are associated with each other.

It is to be noted that the components other than the microcontroller of the control circuit 3 and the receiver of the position detection unit 4 may be configured by CPUs or MPUs that achieve certain functions when a program is executed. Alternatively, these components may be achieved by hardware circuits, such as DSPs, ASICs, or FPGAs, designed in such a way as to achieve the certain functions. Alternatively, the components other than the microcontroller of the control circuit 3 and the receiver of the position detection unit 4 may be configured by a single semiconductor chirp, or may be configured by distributing the functions among a plurality of semiconductor chips. The storage unit 5 may be configured by a semiconductor storage device such as a flash memory or a storage device of another type.

### Industrial Applicability

Since each of a plurality of light sources can autonomously control emission of light on the basis of a position thereof, the optical content display system in the present disclosure need not perform a large amount of communication and can display a desired content using moving light sources through simple control. The optical content display system in the present disclosure is effective as a staging apparatus in an event such as a concert or a sport.

### Reference Signs List

- 1, 1b: light source
- 2, 2b: display device
- 3: control circuit
- 4, 4b, 4c: position detection unit
- 5: storage unit
- 6, 6b: reference point apparatus
- 7: reference point signal
- 8: content information
- 9: reference point coordinate information
- 100: optical content display system

## Claims

1. A content display system comprising:
a plurality of movable light sources,
wherein the content display system displays a content using the plurality of light sources, and
wherein each of the plurality of light sources includes
a display device,
a position detector that detects a position of the light source,
a storage device storing content information in which a plurality of parts of the content are associated with a plurality of positions at which the plurality of parts are to be displayed, and
a control circuit that refers to the content information stored in the storage device, obtains data regarding one of the plurality of parts of the content corresponding to the position of the light source detected by the position detector, and displays the part of the content on the display device.

2. The content display system according to Claim 1, further comprising:
a plurality of reference point apparatuses,
wherein the position detector detects the position of the light source by detecting a positional relationship between at least one of the plurality of reference point apparatuses and the light source.

3. The optical content display system according to Claim 2,
wherein the storage device stores, in advance, reference point coordinate information including positional information indicating positions of the plurality of reference point apparatuses.

4. The optical content display system according to Claim 3,
wherein each of the plurality of reference point apparatuses has ID information distinguishing the reference point apparatus from the other reference point apparatuses,
wherein the reference point coordinate information includes, for the plurality of reference point apparatuses, the ID information associated with the positional information, and
wherein the position detector obtains the ID information from at least one of the plurality of reference point apparatus, refers to the reference point coordinate information stored in the storage device, and detects the position of the light source using the positional information corresponding to the obtained ID information.

5. The optical content display system according to any of Claims 2 to 4,
wherein the plurality of reference point apparatuses are movable.

6. The optical content display system according to any of Claims 2 to 5,
wherein each of the plurality of reference point apparatuses includes a transmission circuit that transmits a signal,
wherein the position detector includes a receiving circuit that receives the signal transmitted from the at least one of the plurality of reference point apparatuses, measures, on the basis of the received signal, a distance between the at least one of the plurality of reference point apparatuses and the light source and a direction of the at least one of the plurality of reference point apparatuses from the light source, and detects the position of the light source on the basis of results of the measurement.

7. The optical content display system according to any of Claims 2 to 5,
wherein each of the plurality of reference point apparatuses includes a transmission circuit that transmits a signal,
wherein the at least one of the plurality of reference point apparatuses is at least three of the plurality of reference point apparatuses, and
wherein the position detector includes a receiving circuit that receives the signals transmitted from the at least three of the plurality of reference point apparatuses, measures distances between the at least three of the plurality of reference point apparatuses and the light source on the basis of delay times taken after the at least three of the plurality of reference point apparatuses transmit the signals until the light source receives the signals, and detects the position of the light source on the basis of results of the measurement.

8. The optical content display system according to any of Claims 2 to 5,
wherein each of the plurality of reference point apparatuses includes a transmission circuit that transmits a signal,
wherein the at least one of the plurality of reference point apparatuses is at least two of the plurality of reference point apparatuses, and
wherein the position detector includes a receiving circuit that receives the signals transmitted from the at least two of the plurality of reference point apparatuses, identifies directions of the at least two of the plurality of reference point apparatuses from the light source by identifying directions in which the signals received by the reception unit have been transmitted, and detects the position of the light source on the basis of results of the measurement.

9. The optical content display system according to any of Claims 2 to 5,
wherein each of the plurality of reference point apparatuses includes a recognition mark distinguishing the reference point apparatus from the other reference point apparatuses,
wherein the at least at least one of the plurality of reference point apparatuses are at least two of the plurality of reference point apparatuses, and
wherein the position detector includes an imaging device that captures images of the recognition marks of the at least two of the plurality of reference point apparatuses and an image analysis circuit that identifies directions of the at least two of the plurality of reference point apparatuses by analyzing the captured images of the recognition marks and detects the position of the light source on the basis of the identified directions.

10. The optical content display system according to Claim 1,
wherein the position detector includes a GPS circuit and detects the position of the light source using data received by the GPS circuit.

11. The optical content display system according to any of Claims 1 to 10,
wherein the content information is information in which the plurality of parts of the content and the plurality of positions and a plurality of times at which the plurality of parts are to be displayed are associated with each other.
